# EUROPÄISCHE PATENTSCHRIFT

(11) **EP 1 584 210 B1**
(45) Veröffentlichungstag und Bekanntmachung des Hinweises auf die Patenterteilung: **10.12.2008**
(21) Anmeldenummer: 04702641.4
(22) Anmeldetag: 16.01.2004
(51) Int. Cl.: H04Q 7/34, H04Q 7/22

(54) **Verfahren zum Testen von SMS-Verbindungen in Mobilkommunikationssystemen**
Method for testing sms connections in mobile communication systems
Procédé de test de liaisons pour sms dans des systèmes de téléphonie mobile

(30) Priorität: 17.01.2003 DE 10301904
(43) Veröffentlichungstag der Anmeldung: 12.10.2005
(73) Patentinhaber: T-Mobile Deutschland GmbH, 53227 Bonn (DE)
(72) Erfinder: BUDELSKY, Dietmar, 50259 Pulheim (DE)
(74) Vertreter: Riebling, Peter
(86) Internationale Anmeldenummer: PCT/DE2004/000052
(87) Internationale Veröffentlichungsnummer: WO 2004/066654

(56) Entgegenhaltungen:
- WO-A-01/95651
- TEKTRONIX: "Product Description MCGS Mobile Call Generation System" XXX, 2. Februar 1999 (1999-02-02), XP002288469
- SIEMENS: "Product Description SoftDataLink 3.0" XXX, Januar 2000 (2000-01), XP002288470

## Beschreibung

Die Erfindung betrifft ein Verfahren zum Testen von SMS-Verbindungen in Mobilkommunikationssystemen nach dem Oberbegriff des Patentanspruchs 1.

Der Test von SMS-Verbindungen, insbesondere Verbindungen zu SMS-Mehrwertdiensten, erfordert die wiederholte, dokumentierte Ausführung formatierter SMS-Eingaben. Die SMS-Eingaben erfolgten bisher entweder mittels eines Mobilkommunikationsendgeräts über dessen Tastatur oder über gängige PC-Hilfsprogramme zur Verwaltung und leichteren Eingabe der SMS-Nachrichten. Tests mit verschiedenen SIM-Karten, etwa für verschiedene Vertragsverhältnisse oder Regressionstests erforderten eine manuelle Wiederholung dieses Vorgangs.

Die Dokumentation der ausgeführten Meldungen und der Mehrwertantwortmeldungen erfolgte manuell auf Papierlisten oder durch Abschreiben der empfangenen SMS-Inhalte. Die genauen Zeitpunkte des Empfangs der SMS-Nachrichten konnten dabei nur geschätzt werden.

Mit der Einführung interaktiver, nicht mehr statischer Mehrwertdienste über sogenannte SMS-Micropaymentverfahren kann der Test eines einzelnen Dienstes mehrere hundert SMS umfassen, um den gesamten Diensteinhalt zu erhalten. Zur Erfassung von z.B. Rechtschreibfehlern und sprachlichen Fehlern muss der genaue Text der Antworten dokumentiert werden. Dies gilt insbesondere auch zur Dokumentation der durchgeführten Korrekturen. Für die Vielzahl der zur Zeit eingeführten neuen Dienste ist das manuell nur unter sehr hohem Zeitaufwand zu gewährleisten.

Wegen des entsprechenden notwendigen Dokumentationsaufwandes sind systematische Wirknetztests zur Überprüfung der momentanen Inhalte von SMS-Mehrwertdiensten oder der korrekten Vergebührung von neuen Diensten bzw. bereits vorhandenen Diensten nach Tarifänderungen ebenfalls sehr zeitaufwändig.

Mit der Produktbeschreibung von der Firma Textronix "Product Description MCGS Mobile Call Generation System" vom 2. Februar 1999, XP002288469 wird ein Verfahren zum Testen von SMS-Verbindungen in Mobilkommunikationssystemen offenbart, wobei eine oder mehrere SMS-Nachrichten oder SMS-Dialoge zwischen einer Testeinrichtung und mindestens einer Gegenstelle automatisch ausgetauscht werden und die von der Testeinrichtung abgehenden und bei der Testeinrichtung eingehenden SMS-Protokollnachrichten vollständig tabellarisch erfasst werden. Dieses Verfahren weist den Nachteil auf, dass der Produktbeschreibung eine Testfunktion der Software nicht zu entnehmen ist, welche lediglich einmal konfiguriert wird, und automatisch und wiederholt ausgeführt wird.

Mit der Produktbeschreibung von der Firma Siemens "Product Description SoftDataLink 3.0" vom Januar 2000, XP002288470 wird eine Software beschrieben, welche eine Installation und Konfiguration eines Mobilfunkendgerätes von einem Personalcomputer mittels eines Datenkabels oder einer Infrarotschnittstelle aufweist.

Diese Software ist auch in der Lage, SMS- und Email-Nachrichten über einen Posteingang, wie zum Beispiel mit dem Programm MS Outlook, MS-Exchange oder dergleichen, zu empfangen und zu senden.
Diese Software weist den Nachteil auf, dass der Produktbeschreibung eine Testfunktion der Software nicht zu entnehmen ist, wobei die Testdurchführung lediglich einmal konfiguriert wird, und automatisch und wiederholt ausgeführt wird.

Die Aufgabe der Erfindung besteht darin, ein Verfahren anzugeben, mit dem eine detaillierte und korrekte Auswertung von eingehenden und abgehenden SMS-Nachrichten in Mobilkommunikationssystemen vereinfacht wird.

Diese Aufgabe wird erfindungsgemäß durch die Merkmale des Patentanspruchs 1 gelöst.

Bevorzugte Ausgestaltungen und Weiterbildungen der Erfindung sind in den Unteransprüchen angegeben.

Erfindungsgemäß erfolgt eine vollständige tabellarische Erfassung der von der Testeinrichtung abgehenden (MO: Mobile Originated) und bei der Testeinrichtung eingehenden (MT: Mobile Terminated) SMS-Nachrichteninhalte und -protokolle.

Das beschriebene Verfahren ermöglicht die Erfassung von SMS Verkehr in größerem Umfang, vor allem bei SMS gestützten Mehrwertdiensten, die Überprüfung der korrekten Erfassung der SMS MO/MT durch die Abrechnungssysteme eines GSM Netzbetreibers sowie einen automatischen Ablauf von SMS Dialogen bei systematisierbarem SMS Verkehr oder zur Qualitätskontrolle.

Das Verfahren wird unter Verwendung einer Datenverarbeitungseinrichtung, vorzugsweise eines Personal Computers (PC) mit Standardbetriebssystem, ausgeführt, der über eine geeignete Datenübertragungsschnittstelle, z.B. eine serielle RS 232-Schnittstelle, mit einem SMS-fähigen Mobilkommunikationsendgerät verbunden ist. Der Einsatz eines mobilen PC oder anderen Schnittstellen ist ebenfalls vorgesehen.

Nachfolgend werden einige Funktionen angegeben, die durch das Verfahren ausgeführt beziehungsweise unterstützt werden.

Eine Bedienoberfläche ermöglicht dem Benutzer eine Eingabe der Zielrufnummer der Gegenstelle und des gewünschten SMS-Textes, beziehungsweise bietet die Möglichkeit der Auswahl aus den letzten zehn Eingaben dieser Datenfelder.

Verfahrensgemäß erfolgt eine automatische Protokollierung der Internationalen Mobilteilnehmerkennung IMSI oder eines SIM-Identifiers, des Zeitstempels der Absendung bzw. des Empfangs von SMS Nachrichten, der SMS-Richtung (MO/MT) sowie des SMS-Textes in einer Datei, z.B. einer CSV-Datei, um mit einem geeigneten Datenverarbeitungsprogramm eine Datenauswertung betreiben zu können.

Zusätzlich wird regelmäßig überprüft, ob das GSM-Netz noch verfügbar ist.

Die zur Durchführung des Verfahrens verwendete Datenverarbeitungseinrichtung und das Mobilkommunikationsendgerät sind in der Lage, Scripts abzuarbeiten, die vorzugsweise in einer mächtigen und verbreiteten Scriptsprache abgefasst sind. Damit können SMS Nachrichten versendet und empfangen werden. Die empfangenen SMS Nachrichten können auf Zeit, Absender und Inhalt untersucht werden, um so eine interaktive Reaktion in Form von Ausgaben auf dem Schirm, einer Ausgabe in einer (CSV) Logdatei oder die Versendung weiterer SMS MO zu ermöglichen.

Der Benutzer kann das jeweils benutzte Script interaktiv über eine grafische Benutzerschnittstelle (GUI) oder per Kommandozeile starten.

Die Einstellungen für die Logdateien, die Scriptdatei, das verwendete Mobilendgerät, die letzten Nachrichten, die gewählte Nummern, sowie die Schnittstellen- und Programmeinstellungen werden in einer INI Datei gespeichert, die über einen Kommandozeilenparameter auswählbar ist.

Das beschriebene Verfahren erlaubt es, den Protokollaufwand der SMS Tests völlig automatisch durchzuführen. Die notwendigen Tests müssen nur einmal konfiguriert werden und können dann automatisch und wiederholt abgearbeitet werden. Spätere Regressionstests, Nachtests sowie Wirknetzüberprüfungen erfordern damit nur noch einen minimalen Aufwand.
Erst das erfindungsgemäße Verfahren ermöglicht die vollständige Überprüfung der Inhalte von neuen Mehrwertdiensten.

## Patentansprüche

1. Verfahren zum Testen von SMS-Verbindungen in Mobilkommunikationssystemen, welches einen automatischen Austausch einer oder mehrerer SMS-Nachrichten oder SMS-Dialoge zwischen einer Testeinrichtung und mindestens einer Gegenstelle und eine vollständige tabellarische Erfassung der von der Testeinrichtung abgehenden, MO, und bei der Testeinrichtung eingehenden, MT, SMS-Nachrichtenprotokolle aufweist, **dadurch gekennzeichnet, dass** zusätzlich zu den SMS-Nachrichtenprotokollen die Nachrichteninhalte der eingehenden und ausgehenden SMS-Nachrichten vollständig tabellarisch erfasst werden, wobei die Konfiguration der notwendigen Tests lediglich einmal ausgeführt wird und die Abarbeitung der Tests automatisch und wiederholt erfolgt.

2. Verfahren nach einem der vorhergehenden Ansprüche, **dadurch gekennzeichnet, dass** der SMS-Nachrichtenaustausch auf Basis von rechnergesteuerten Skripten erfolgt.

3. Verfahren nach einem der vorhergehenden Ansprüche, **dadurch gekennzeichnet, dass** das jeweils benutzte Script interaktiv über eine grafische Benutzerschnittstelle, GUI, oder per Kommandozeile gestartet wird.

4. Verfahren nach einem der vorhergehenden Ansprüche, **dadurch gekennzeichnet, dass** die Internationale Mobilteilnehmerkennung IMSI oder ein SIM-Identifiers, ein Zeitstempels der Absendung bzw. des Empfangs der SMS, die SMS-Richtung MO/MT sowie der SMS-Inhalt in einer Datei protokolliert werden.

5. Verfahren nach einem der vorhergehenden Ansprüche, **dadurch gekennzeichnet, dass** die empfangenen SMS-Nachrichten auf Zeit, Absender und Inhalt untersucht werden, und auf Basis dieser Daten eine interaktive Reaktion in Form von Ausgaben auf einem Bildschirm, und/oder in einer Logdatei und/oder durch Versendung weiterer SMS MO erfolgt.

6. Verfahren nach einem der vorhergehenden Ansprüche, **dadurch gekennzeichnet, dass** die Einstellungen für die Logdateien, die Scriptdateien, die verwendete Testeinrichtung, die letzte SMS-Nachrichten, die gewählten Rufnummern, sowie die Schnittstellen- und Programmeinstellungen in einer INI-Datei gespeichert werden

7. Verfahren nach einem der vorhergehenden Ansprüche, **dadurch gekennzeichnet, dass** die INI-Datei über einen Kommandozeilenparameter auswählbar ist.

8. Verfahren nach Anspruch 1, **dadurch gekennzeichnet, dass** eine Überprüfung der korrekten Erfassung der SMS MO/MT durch Abrechnungssysteme des Betreibers des Mobilkommunikationsnetzes erfolgt.

9. Verfahren nach einem der vorhergehenden Ansprüche, **dadurch gekennzeichnet, dass** die Verfügbarkeit des Mobilkommunikationsnetzes in regelmäßigen Zeitabständen überprüft wird.

10. Verfahren nach einem der vorhergehenden Ansprüche, **dadurch gekennzeichnet, dass** als Testeinrichtung ein Mobilkommunikationsendgerät verwendet wird, das über eine standardisierte Datenübertragungsschnittstelle mit einer Datenverarbeitungseinrichtung verbunden ist.

## Claims

1. Method for testing SMS connections in mobile communications systems having automatic exchange of one or more SMS messages or SMS dialogues between a test device and at least one remote station and complete tabular capture of the SMS message logs MO, outgoing from the test device, and MT, incoming in the test device, **characterised in that** in addition to the SMS message logs, the message contents of the incoming and outgoing SMS messages are captured completely in tabular form, wherein the configuration of the necessary tests is executed only once and the tests are worked through automatically and repeatedly.

2. Method according to any of the preceding claims, **characterised in that** the SMS message exchange ensues on the basis of computer-controlled scripts.

3. Method according to any of the preceding claims, **characterised in that** the script used at any time is started interactively via a graphic user interface GUI or by command line.

4. Method according to any of the preceding claims, **characterised in that** the international mobile subscriber identification IMSI or a SIM identifier, a time stamp of dispatch or receipt of the SMS, the SMS direction MO/MT and the SMS content are recorded in a file.

5. Method according to any of the preceding claims, **characterised in that** the received SMS messages are examined for time, sender and content and on the basis of these data an interactive response ensues in the form of outputs to a screen and/or a log file and/or by dispatch of a further SMS MO.

6. Method according to any of the preceding claims, **characterised in that** the settings for the log files, the script files, the test device used, the last SMS messages, the call numbers dialled and the interface and program settings are stored in an INI file.

7. Method according to any of the preceding claims, **characterised in that** the INI file is selectable via a command line parameter.

8. Method according to claim 1, **characterised in that** examination of the correct capture of the SMS MO/MT is carried out by billing systems of the operator of the mobile communications network.

9. Method according to any of the preceding claims, **characterised in that** the availability of the mobile communications network is checked at regular intervals of time.

10. Method according to any of the preceding claims, **characterised in that** for the test device a mobile communications terminal device is used which is connected via a standardised data transmission interface to a data processing device.

## Revendications

1. Procédé pour tester des liaisons SMS dans des systèmes de communication mobile, qui comporte un échange automatique d'un ou plusieurs messages SMS ou dialogues SMS entre un dispositif de test et au moins un poste terminal, et un enregistrement complet, sous forme de tableau, des protocoles de message SMS MO (à partir d'un mobile) partant du dispositif de test et de protocoles de message SMS MT (vers un mobile) arrivant dans le dispositif de test,
**caractérisé en ce qu'**en plus des protocoles de message SMS, les contenus des messages SMS arrivant et sortant sont entièrement enregistrés sous forme de tableau, la configuration des tests nécessaires étant effectuée une seule fois et l'exécution des tests étant automatique et répétée.

2. Procédé selon l'une des revendications précédentes, **caractérisé en ce que** l'échange de messages SMS se fait sur la base de scripts commandés par ordinateur.

3. Procédé selon l'une des revendications précédentes, **caractérisé en ce que** le script utilisé à chaque fois est démarré de manière interactive par l'intermédiaire d'une interface utilisateur graphique GUI, ou d'une ligne de commande.

4. Procédé selon l'une des revendications précédentes, **caractérisé en ce que** l'identification internationale d'abonné mobile IMSI ou un identifiant SIM, une estampille de l'envoi ou de la réception du SMS, le sens du SMS MO/MT et le contenu du SMS sont consignés dans un fichier.

5. Procédé selon l'une des revendications précédentes, **caractérisé en ce que** l'heure, l'expéditeur et le contenu des messages SMS reçus sont examinés, et sur la base de ces données a lieu une réaction interactive sous la forme de sorties sur un écran et/ou dans un fichier-journal ou grâce à l'utilisation d'autres SMS MO.

6. Procédé selon l'une des revendications précédentes, **caractérisé en ce que** les réglages pour les fichiers-journaux, les fichiers de scripts, le dispositif de test utilisé, les derniers messages SMS, les numéros d'appel composés ainsi que les réglages d'interface et de programme sont mis en mémoire dans un fichier INI.

7. Procédé selon l'une des revendications précédentes, **caractérisé en ce que** le fichier INI peut être sélectionné par l'intermédiaire d'un paramètre de ligne de commande.

8. Procédé selon la revendication 1, **caractérisé en ce qu'**il y a une vérification de l'enregistrement correct du SMS MO/MT grâce à des systèmes de facturation de l'exploitant du réseau de communication mobile.

9. Procédé selon l'une des revendications précédentes, **caractérisé en ce que** la disponibilité du réseau de communication mobile est vérifiée à intervalles réguliers.

10. Procédé selon l'une des revendications précédentes, **caractérisé en ce qu'**on utilise comme dispositif de test un terminal de communication mobile qui est relié à un dispositif informatique par l'intermédiaire d'une interface de transmission de données normalisée.
